# EUROPÄISCHE PATENTSCHRIFT

(11) **EP 2 008 750 B1**
(45) Veröffentlichungstag und Bekanntmachung des Hinweises auf die Patenterteilung: **24.11.2010**
(21) Anmeldenummer: 08104547.8
(22) Anmeldetag: 26.06.2008
(51) Int. Cl.: B23K 9/167, B23K 9/28, B23K 9/29

(54) **Wolfram-Inertgas-Schweissbrenner**
TIG welding torch
Chalumeau de soudage TIG

(30) Priorität: 28.06.2007 DE 102007031534
(43) Veröffentlichungstag der Anmeldung: 31.12.2008
(73) Patentinhaber: EWM Hightec Welding GmbH, 56271 Mündersbach (DE); Kjellberg Finsterwalde Plasma und Maschinen GmbH, 03238 Finsterwalde (DE)
(72) Erfinder: Füssel, Uwe, Prof.Dr.-Ing. habil., 09114 Chemnitz (DE); Fuentes Munoz, Julio Enrique, Dipl.-Ing., 01159 Dresden (DE); Zschetzsche, Jürgen, Dr.-Ing., 01129 Dresden (DE); Schnick, Michael, Dipl.-Ing., 09353 Oberlungwitz (DE)
(74) Vertreter: Cohausz & Florack

(56) Entgegenhaltungen:
- EP-A- 0 056 421
- WO-A-95/31306
- DE-A1- 2 447 393
- US-A- 3 076 085

## Beschreibung

Die Erfindung betrifft einen Wolfram-Inertgas-Schweißbrenner mit einem Brennerkopf, wie aus der WO-A-9531306 bekannt.

Das Wolfram-Inertgasschweißen ist ein weit verbreitetes Verfahren. Die Schweißanlagen und vor allem die zugehörigen Schweißbrenner sind einfach aufgebaut, leicht zu warten und kostengünstig in der Anschaffung. Der Lichtbogen brennt frei zwischen einer nicht abschmelzenden Wolframelektrode und dem Werkstück, wobei die Energiedichte verhältnismäßig gering ist.

Eine Vorrichtung zum Wolfram-Inertgasschweißen ist in der Druckschrift DIN ISO 857-1-2002-11 beschrieben, wobei, wie in Fig. 1 gezeigt ist, das Wolfram-Inertgasschweißen mit einer mit einer Spitze 11 versehenen Elektrode 8 aus reinem Wolfram oder legiertem Wolfram durchgeführt wird und der Lichtbogen 2 und die Schweißzone durch einen Mantel 6 aus inertem Gas geschützt werden. Die Vorrichtung 10 enthält ein die stabförmige Wolframelektrode 8 halterndes Stromkontaktrohr 7, das zugleich ein Klemmelement für die Wolframelektrode 8 darstellt, und eine Schutzgasdüse 5, die das Stromkontaktrohr 7 und die Wolframelektrode 8 umgibt. Der Spalt im Werkstück 1 wird mittels eines zugeführten Schweißzusatzes 4 mit einer Schweißnaht 3 geschlossen. Der Lichtbogen 2 wird während des Schweißvorganges von einer Energiequelle 9 gespeist.

Eine andere Vorrichtung zum Schweißen unter Schutzgas mit einer nichtabschmelzenden Elektrode ist in der Druckschrift DE 32 07 537 A1 beschrieben, in der eine mit Kühlmedien gekühlten Elektrode vorgesehen ist, wobei in einer im Bereich der Schutzgasaustrittsöffnung konisch gestalteten Schutzgasdüse eine an ihrer Spitze konisch gestaltete Elektrode aus Kupfer angeordnet ist, wobei der Düsenwinkel kleiner als der Elektrodenwinkel ausgebildet ist und das unter der Wärmewirkung des Lichtbogens entstandene Schweißbad sich in einer von einem Aktivgas oder Inertgas gebildeten Schutzgasatmosphäre befindet.

Ein Problem besteht darin, dass die Elektrode als Hohlelektrode mit innerer Kühlung und Kühlströmung ausgebildet ist und damit schwerlich gegen eine andere Elektrode ausgetauscht werden kann.

Ein Lichtbogenschweiß- oder -schneidbrenner mit einem Brennerkörper und einem darin aufgenommenen Elektrodenhalter für eine stabförmige Wolframelektrode ist in der Druckschrift DE 43 14 097 A1 beschrieben, bei dem zwischen einem Außenkörper des Brennerkörpers und dem Elektrodenhalter ein Kühlkörper vorgesehen ist, dessen Werkstoff eine größere Wärmeleitfähigkeit als der Werkstoff des Elektrodenhalters und des Außenkörpers aufweist. Dabei bestehen der Kühlkörper aus Kupfer, der Außenkörper aus Nichteisenmetall und der Elektrodenhalter aus Edelstahl. Die Elektrode wird mit einer Spannhülse, die sich in einem Spannhülsengehäuse - einer Gaslinse - befindet, in dem Brennerkopf eingespannt. Der Brennerkopf kann wassergekühlt sein.

Ein Problem besteht darin, dass mit dieser Konstruktion eine intensive Kühlung der Elektrode nicht möglich ist.
Ein weiteres Problem besteht darin, dass die mit der Elektrode nahe und weitgehend in Verbindung stehenden, unterschiedlichen Materialien unterschiedliche Wärmeleitfähigkeiten aufweisen, so dass eine durchgehend kontinuierliche Ableitung der Wärme von der Elektrode aus in den Brennerkopf kaum gewährleistet ist.

Eine höhere Energiedichte von Lichtbogen wird durch eine mechanische Einschnürung des Lichtbogens beim Plasmaschweißen mit Plasmaschweißbrennern, die in den Druckschriften DE 193 36 39 A und DE 39 30 267 A1 beschrieben sind, erreicht. Dabei weist, wie z.B. in Fig. 2 ein Ausschnitt durch einen Plasmaschweißbrenner 21 zeigt, der eine in einem Elektrodenhalter und Kühlkörper 12 arretierte, stabförmige Wolframelektrode 13 mit einer Kegelspitze 14 auf, die vor der Ausgangsöffnung 15 einer halbovalen, nach unten geöffneten Plasmadüse 16 - eine Kupferdüse - angeordnet ist, die zur Einschnürung des Lichtbogens 20 dient. Die Plasmadüse 16 wiederum ist von einer nach unten geöffneten Gasaustrittsöffnung 17 einer Strahlführung 18 umgeben.
Die Kegelspitze 14 der Wolframelektrode 13 ist wie die beiden Öffnungen 15,17 zum zu bearbeitenden Werkstück 19 gerichtet. Bei dem Plasmaschweißbrenner 21 brennt der Lichtbogen 20 zwischen der Elektrode 13 und dem Werkstück 19. Das Austreten der Elektronen beruht beim Lichtbogenschweißen hauptsächlich auf thermischer Emission an der Elektrodenspitze 13. Eine ausreichend hohe Anzahl von austretenden Elektronen wird ab einer Temperatur von ca. 1700 K erreicht.

Ein Problem besteht darin, dass bei Plasmaschweißbrennern der Verschleiß der Plasmadüse 16 sehr hoch ist, da sie einen direkten Kontakt mit dem ca. 20000K heißen Plasmastrahl hat.

Auch die Positionierung der Elektrode 13 zur Plasmadüse 16 wirkt sich signifikant auf den Prozess aus. Der Aufbau der Brenner 21 ist aufgrund der hohen Genauigkeitsanforderungen kompliziert und die Kosten betragen im Vergleich zu den Wolfram-Inertgas-Schweißanlagen ca. das Vier- bis Fünffache.

Ein anderes Bauprinzip wird in der Druckschrift AT 407 022 B beschrieben. Dort wird die Einschnürung des Lichtbogens durch eine axiale Gasströmung erreicht.

Ein Problem besteht darin, dass in dem System, das auf der Einschnürung des Lichtbogens mittels äußerer Gasanströmung beruht, der Spalt zwischen der E-Iektrode und der Einschnürungsgasdüse sehr klein gehalten werden muss. Das ist nur mit sehr kleinen Fertigungstoleranzen zu erreichen. Deshalb erfordern die entsprechenden Brenner ebenfalls einen sehr hohen Fertigungsaufwand und sehr hohe Herstellungskosten.

Des Weiteren ist die magnetische Einschnürung des Lichtbogens in der Druckschrift DE 28 34 732 A1 beschrieben.

Ein Problem besteht darin, dass bei Beeinflussung des Lichtbogens durch Magnetfelder die zugehörigen Spulen in Lichtbogennähe positioniert werden müssen. Das beeinflusst die Zugänglichkeit und erfordert temperatur- und strahlungsresistente Bauelemente.

Eine Schweißanlage auf der Basis des Wolfram-Inertgasschweißens ist in der Druckschrift US 4,194,107 beschrieben, die auch eine stabförmige Wolframelektrode aufweist, die aber aus mehreren Teilen besteht. Das zum Werkstück gerichtete Teil stellt einen spitzen Kegel dar, an dessen Kegelboden ein zweites Teil in Form eines Verbindungszylinders gelötet oder geschweißt ist. Daran schließt sich als drittes Teil ein zylindrisches Verbindungselement an, das an den Verbindungszylinder ebenfalls gelötet oder geschweißt ist. Die stabförmige Wolframelektrode wird in eine zylindrische Ausnehmung eines zangenartigen Halterungskopfes gesteckt und von dem Halterungskopf gehaltert.

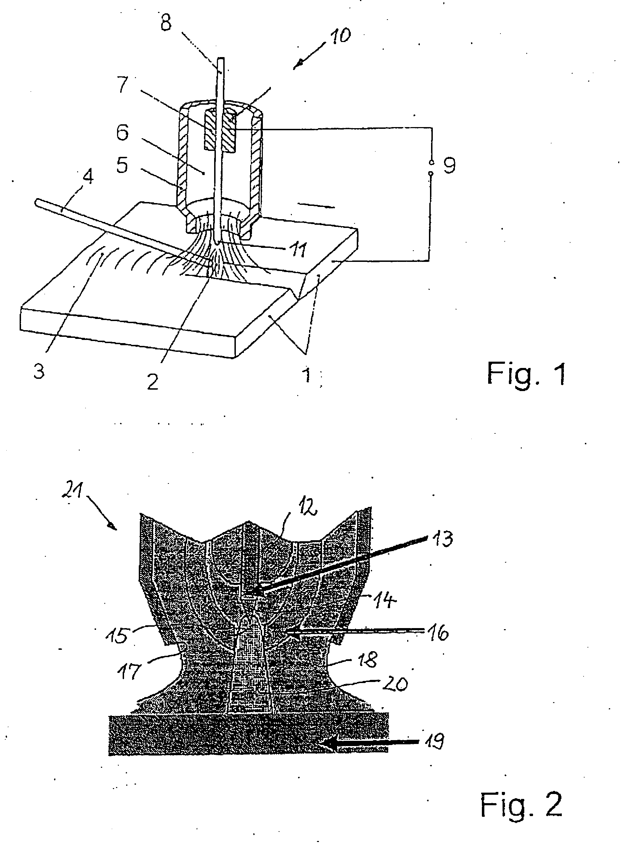

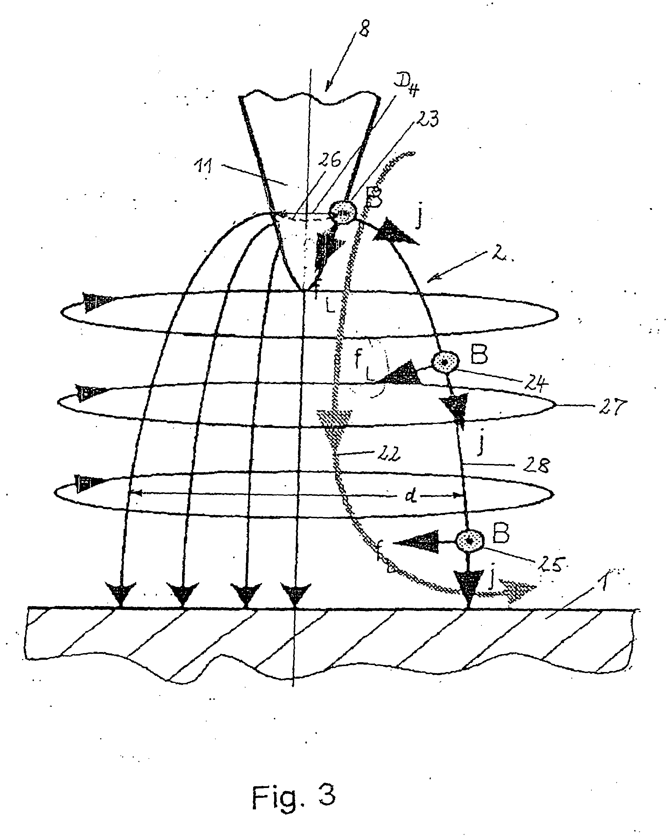

In Fig. 3 ist schematisch in Anlehnung an Fig. 1 eine Lichtbogenströmung 22 aus der mit negativen Potential versehenen Elektrode 8 mit der zugehörigen Spitze 11 zu dem positiv geladenen Werkstück 1 dargestellt.

Der Lichtbogen ist eine elektrischen Gasentladung und an frei bewegliche Ladungsträger, an Elektronen und Ionen 23,24,25, gebunden. Der Lichtbogen kann als stromdurchflossener Leiter aufgefasst werden, um den sich ein ringförmiges Magnetfeld ausbildet. Die dominierende Ursache für die Strömung 22 im frei brennenden Lichtbogen 2 ist die eigenmagnetische Kompression infolge der Lorentzkraft f_{L} und der daraus folgende hohe Lichtbogendruck in den Einschnürungsgebieten an den Elektroden, der durch eine axiale Strömung ausgeglichen wird. Dabei wird ein starker konvektiver Wärmestrom und eine hohe E-nergieeintragsdichte in das Werkstück verursacht.

Da sich die magnetische Flussdichte B proportional zur Stromdichte j und die Stromdichte j umgekehrt proportional zum Quadrat des Durchmessers d verhalten, ergibt sich eine sehr starke Abhängigkeit der eigenmagnetischen Kompression vom Durchmesser d des Lichtbogens 2 mit f_{L} ~ 1/d⁴. Da die Stromdichte j an der Elektrodenspitze 11 sehr hoch ist, wird das Plasma des Lichtbogens 2 an dieser Stelle besonders stark beschleunigt. Das durch den Druckausgleich nachströmende Gas 22 muss auf lonisationstemperatur aufgeheizt werden und kühlt die Lichtbogenrandbereiche aus, was zur Einschnürung des Lichtbogens 2 führt, so dass sich final die Strömung 22 ausbildet.

Das Austreten der Elektronen aus der Kathode beruht beim Wolfram-Inertgasschweißen hauptsächlich auf thermischer Emission. Die Anzahl der austretenden Elektronen steigt mit der Kathodentemperatur. Die Isothermen stellen daher gleichzeitig lsoemissionslinien dar.

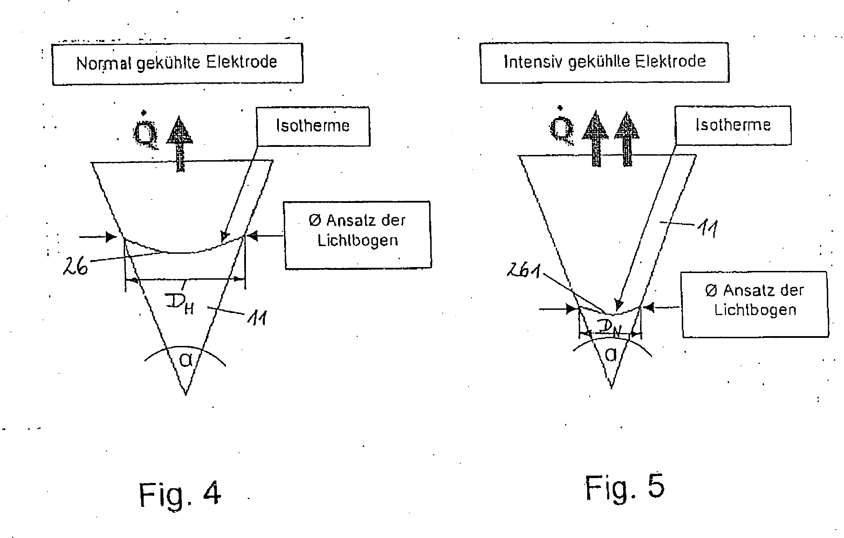

Bei gemeinsamer Betrachtung der Fig. 3 und der Fig. 4 stellt jeweils die Emissionsisotherme 26 den Ansatz des Lichtbogens 2 mit dem Durchmesser D_{H} dar, wobei sich der Ansatz des Lichtbogens 2 bei herkömmlicher und normaler Kühlung, die durch die Wärmeableitung Q abgegeben ist, etwa im Mittenbereich der Kegelspitze 11 befindet.

Ein Problem besteht darin, dass schon der relativ große Durchmesser D_{H} des Lichtbogenansatzes 26 auf der Elektrodenspitze 11 einen größeren Durchmesser d des Lichtbogens 2 in Richtung zum Werkstück 1 und insbesondere auf der Oberfläche des Werkstücks 1 erzeugt, wodurch schließlich eine geringe Stromdichte j und damit geringe Energiedichte auf dem Werkstück 1 vorhanden sind.

Der Erfindung liegt die Aufgabe zugrunde, einen Wolfram-Inertgas-Schweißbrenner anzugeben, dessen Brennerkopf derart geeignet ausgebildet ist, dass eine Erhöhung der Energiedichte des Lichtbogens beim Wolfram-Inertgasschweißen auf dem zu bearbeitenden Werkstück erzielt werden kann. Es sollen des Weiteren auch eine höhere Schweißgeschwindigkeit und eine geringere thermische Beeinflussung des Werkstoffs erreicht werden.

Die Aufgabe wird durch die Merkmale des Patentanspruchs 1 gelöst.
Der Wolfram-Inertgas-Schweißbrenner ist mit einem Brennerkopf versehen, der gemäß dem Patentanspruch 1 aus
- einem Gehäusezylinder mit einem oberen Deckelverschluss, durch den zumindest eine Vorlaufleitung und eine Rücklaufleitung für Kühlmittel sowie eine Inertgaszuleitung und ein Elektroanschluss für den Betrieb einer Wolframelektrode geführt sind,
- einem innerhalb des Gehäusezylinders befindlichen länglichen Kühlkörper mit einem darin befindlichen länglichen, an der oberen Stirnseite des Kühlkörpers offenen Hohlraum und einem darauf befindlichen Innendeckelverschluss, durch den die Leitungen für das Kühlmittel führen,
- einer auf der unteren Stirnseite des Kühlkörpers längs der Brennerkopfachse eingelassene Gewindebohrung,
- einer in die Gewindebohrung passfähige arretierfähige Elektrode, die einen zylindrischen und mit einer Kegelspitze versehenen Wolframelektrodenkörper aufweist, dessen Spitzenende in einem vorgegebenen Abstand a zur unteren Stirnseite des Kühlkörpers angeordnet ist, und
- einer mit dem länglichen Kühlkörper unter Einbindung von Längskanälen in Verbindung stehende verschraubbare Gasdüse, die den Kühlkörper und die Elektrode umgibt,
besteht,
wobei der thermische Widerstand der dem Wolframelektrodenkörper nachgeordneten Materialien niedrig ist und die Kühlung über den Kühlkörper bis an die Gewindebohrung oder direkt an die Elektrode herangeführt ist und sich eine Emissionsisotherme ausbildet, die durch die intensive Kühlung der Elektrode, den Elektrodendurchmesser dₑ und durch einen definierten Winkel α in Richtung zum freien Spitzenende des Wolframelektrodenkörpers verschoben ist.

Nahe oder außerhalb des Brennerkopfes an der Rücklaufleitung kann ein Elektroanschluss für den Betrieb der Wolframelektrode angebracht sein.

Die passfähige arretierbare und austauschbare Elektrode kann selbst am zylindrischen Teil des Elektrodenkörpers ein der Gewindebohrung angepasstes Gewinde aufweisen und direkt kühlkörperkontaktiert in die Gewindebohrung eingeschraubt sein oder einen Durchgang aufweisende Elektrodenhalterung haben, in der der Elektrodenkörper eingepasst befestigt ist und die ein der Gewindebohrung angepasstes Außengewinde zum halternden Einschrauben in die Gewindebohrung besitzt.

Die den Durchgang aufweisende Elektrodenhalterung kann eine Hohlschraube sein.

Die Elektrodenhalterung kann aus einem Material mit niedrigem thermischem Widerstand, insbesondere aus Kupfer oder legiertem Kupfer bestehen.

Der Wolframelektrodenkörper und die Elektrodenhalterung sind kraft- oder stoffschlüssig miteinander verbunden, wobei zwischen beiden ein geringer elektrischer und thermischer Widerstand vorgesehen ist.

Zwischen dem länglichen Kühlkörper und der Gasdüse sind parallel zur Brennerkopfachse gerichtete Längskanäle vorhanden, die an der Außenwandung des Kühlkörpers und/oder an der Innenwandung der Gasdüse eingebracht sind.

Die Elektrodenkühlung kann als Flüssigkeitskühlung ausgebildet sein.

Das Spitzenende weist einen geringen Abstand a zum kühlmittelgekühlten Kühlkörper auf.

Der öffnende Winkel α der kegelförmigen Elektrodenspitze kann zwischen 7° und 90° liegen.

Die Erfindung ermöglicht es, dass eine Erhöhung der Energiedichte des Wolfram-Inertgas-Schweißbrenners erreicht wird.

Durch eine intensive Kühlung und bei bestimmten Winkeln der kegelförmigen Elektrode verschiebt sich die Emissionsisotherme in Richtung zum freien Ende der Elektrodenspitze. Damit setzt der Lichtbogen an einem kleineren Durchmesser D_{N} an und weist dadurch eine höhere Energiedichte auf. Der Elektrodendurchmesser dₑ liegt über den beim Wolfram-Inertgasschweißen üblichen, der Elektrodenwinkel α liegt zwischen 7° bis 90°. Beide werden für die entsprechende Anwendung angepasst und eingestellt.

Die Stromdichte j des Lichtbogens wird zusätzlich durch die eigenmagnetische Kompression mittels der wirkenden Lorentzkraft f_{L} des Lichtbogens verstärkt, die den Durchmesser d der elektrischen Stromlinien verengt, weil die eigenmagnetische Kompression abhängig vom Durchmesser d des Lichtbogens ist. Wenn der Durchmesser D_{N} des Lichtbogenansatzes klein genug wird, entstehen ein sich selbst kontrahierender Plasmastrahl und damit eine erhöhte Energiedichte an der Oberfläche des Werkstücks.

Die intensive Kühlung der Elektrodenspitze wird in der Erfindung dadurch gelöst, dass auf der Distanz zwischen der Elektrodenspitze und dem Kühlmedium im Brennerkopf der thermische Widerstand möglichst gering ist.

Der gesamte thermische Widerstand ergibt sich aus den Summen der einzelnen Stoff- bzw. Kontaktwiderständen, die es zu minimieren gilt. Dazu kann der zylindrische Teil des Wolframelektrodenkörpers in thermisch besser leitfähigen Metall, z.B. Silber, Kupfer, Aluminium oder Metalllegierungen, eingebettet werden und der leitende Querschnitt der Konstruktionselemente vergrößert werden.

Die Erfindung ermöglicht die Erhöhung der Schweißgeschwindigkeit und das Verringerung der Streckenenergie, des Verzuges sowie der thermischen Beeinflussung des Grundwerkstoffes als auch die Erhöhung der Einschweißtiefe. Der modifizierte Wolfram-Inertgas-Schweißbrenner kann aufgrund seiner Konstruktion zum effizienten Schweißen, Löten, Umschmelzen und Stoffeigenschaftsändern metallischer Werkstoffe genutzt werden.

Es wird ein Wolfram-Inertgas-Schweißbrenner mit einer nicht abschmelzenden Elektrode angegeben, der die hohe Energiedichte nicht durch eine zusätzliche Düse, eine zusätzliche äußere Gasanströmung oder ein zusätzliches Magnetfeld erreicht.

Dazu weist der Wolfram-Inertgas-Schweißbrenner einen einfachen Aufbau auf.

Die Erfindung wird anhand mehrerer Ausführungsbeispiele mittels mehrerer Zeichnungen näher erläutert:
Es zeigen:
- Fig. 1: eine schematische Darstellung einer Anordnung zum Wolfram-Inertgasschweißen nach dem Stand der Technik,
- Fig. 2: eine schematische Darstellung eines Endteils des Brennerkopfes eines Plasmaschweißbrenners nach dem Stand der Technik,
- Fig. 3: eine schematische Darstellung eines Lichtbogens,
- Fig. 4: eine Isothermen-Darstellung des Lichtbogenansatzes an einer kegelförmigen Wolframelektrode mit einer Elektrodenspitze mit geringer Kühlung nach dem Stand der Technik,
- Fig. 5: eine Isothermen-Darstellung des Lichtbogenansatzes an eine kegelförmigen Wolframelektrode mit einer Elektrodenspitze mit intensiver Kühlung gemäß dem erfindungsgemäßen Brennerkopfes,
- Fig. 6: eine Seitenansicht des erfindungsgemäßen Wolfram-Inertgas- Schweißbrennerkopfes,
- Fig. 7: eine Schnittdarstellung des erfindungsgemäßen Wolfram-Inertgas- Schweißbrennerkopfes nach Fig. 6,
- Fig. 8: mehrere Darstellungen eines Brennerkopfes mit geschlossener Gewindebohrung im Kühlkörper, wobei
Fig. 8a einen geöffneten Brennerkopf mit abgeschraubter Gasdüse und den parallel zu der Brennerkopfachse geführten Längskanälen am Kühlkörper und
Fig. 8b einen Querschnitt längs der Linie B-B in Fig. 8a zeigen, und
- Fig. 9: mehrere Darstellungen eines Brennerkopfes mit offener Gewindebohrung zum kühlmitteldurchströmten Hohlraum des Kühlkörpers, wobei
Fig. 9a den geschlossenen Brennerkopf in Vorderansicht,
Fig. 9b den geöffneten Brennerkopf mit abgeschraubter Gasdüse und den parallel zur Brennerkopfachse geführten Längskanälen am Kühlkörper,
Fig. 9c einen Querschnitt längs der Linie C-C in Fig. 9b und Fig. 9d eine Draufsicht auf den Deckelverschluss mit den Anschlüssen für Kühlmittel und Gas
zeigen.

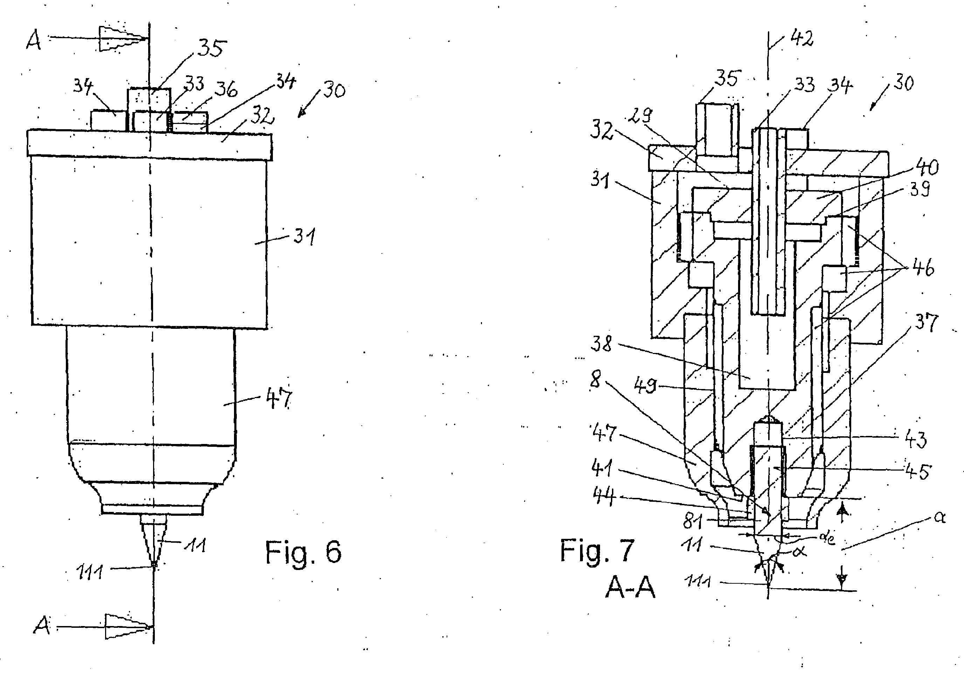

Im Folgenden werden die Fig. 6 und 7 gemeinsam betrachtet.
Der darin dargestellte Brennerkopf 30 eines Wolfram-Inertgas-Schweißbrenners besteht aus
- einem Gehäusezylinder 31 mit einem oberen Deckelverschluss 32, durch den eine Vorlaufleitung 33 und zwei Rücklaufleitungen 34 für Kühlmittel sowie eine Inertgaszuleitung 35 und ein Elektroanschluss 36 für den Betrieb einer Wolframelektrode 8 geführt sind,
- einem innerhalb des Gehäusezylinders 31 befindlichen länglichen Kühlkörper 37 mit parallel zur Brennerkopfachse 42 gerichteten Längskanälen 46 und mit einem darin befindlichen länglichen, an der oberen Stirnseite 39 des Kühlkörpers 37 offenen Hohlraum 38 und einem darauf befindlichen Innendeckelverschluss 40, durch den die Leitungen 33,34 für das Kühlmittel führen,
- einer auf der unteren Stirnseite 41 des Kühlkörpers 37 längs der Brennerkopfachse 42 eingelassene Gewindebohrung 43,
- einer in die Gewindebohrung 43 passfähige arretierfähige Elektrodenhalterung 44 mit einem inneren zylindrischen Durchgang 45,
- einer mit dem Gehäusezylinder 31 in Verbindung stehende verschraubbare Gasdüse 47, die den Kühlkörper 37 und die Elektrodenhalterung 44 umgibt,
- einem in den inneren zylindrischen Durchgang 45 eingebrachten zylindrischen und mit einer Kegelspitze 11 versehenen Wolframelektrodenkörper 81 mit dem Durchmesser dₑ, dessen Spitzenende 111 in einem vorgegebenen Abstand a zur unteren Stirnseite 41 des Kühlkörpers 37 angeordnet ist,
wobei der thermische Widerstand der dem Wolframelektrodenkörper 81 nachgeordneten Materialien niedrig ist und die Kühlung über den Kühlkörper 37 bis an die Gewindebohrung 43 oder direkt an die Elektrode 8 herangeführt ist und sich eine Emissionsisotherme 261 ausbildet, die durch die intensive Kühlung der Elektrode, den Elektrodendurchmesser dₑ und durch einen definierten Winkel α in Richtung zum freien Spitzenende 111 des Wolframelektrodenkörpers 81 verschoben ist.

Außerhalb des Brennerkopfes 30 kann an der Rücklaufleitung 34 ein Elektroanschluss 36 für den Betrieb der Wolframelektrode 8 angebracht sein.

Die passfähige arretierbare Elektrode 8 kann selbst am zylindrischen Teil des Wolframelektrodenkörpers 81 ein der Gewindebohrung 43 angepasstes Gewinde aufweisen und direkt kühlkörperkontaktiert in die Gewindebohrung 43 eingeschraubt sein oder eine den Durchgang 45 aufweisende Elektrodenhalterung 44 haben, in der der Wolframelektrodenkörper 81 mittels Löten oder Einpressen eingepasst befestigt ist und die ein der Gewindebohrung 43 angepasstes Außengewinde zum halternden Einschrauben in die Gewindebohrung 43 besitzt.

Der Wolframelektrodenkörper 81 kann entweder im Falle eines eigenen Gewindes selbst austauschbar oder im Falle der Einbindung in die von außerhalb des Brennerkopfes 30 betätigbare Elektrodenhalterung 44 mit der Elektrodenhalterung 44 gemeinsam austauschbar sein.

Die den Durchgang 45 aufweisende Elektrodenhalterung 44 kann eine Hohlschraube sein.

Die Elektrodenhalterung 44 besteht aus einem Material mit niedrigem thermischem Widerstand, insbesondere aus Kupfer, Silber oder deren Legierungen.

Der zylindrische Teil des Wolframelektrodenkörpers 81 und die Elektrodenhalterung 44 können kraft- oder stoffschlüssig miteinander verbunden sein, wobei zwischen beiden ein geringer elektrischer und thermischer Widerstand vorgesehen ist.

Zwischen dem länglichen Kühlkörper 37 und der Gasdüse 47 können in axialer Richtung zur Brennerkopfachse 42 gerichtete Längskanäle 46 vorhanden sein, die im Bereich an der Außenwandung 49 des Kühlkörpers 37 und/oder auch an der Innenwandung der Gasdüse 47 vorhanden sein können.

Die Elektrodenkühlung kann als Flüssigkeitskühlung ausgebildet sein. Dabei ist die Vorlaufleitung 33 wahlweise bis weit in den länglichen Hohlraum 38 des Kühlkörpers 37 hinein eingebracht, um das einströmende, eine Niedrigtemperatur aufweisende Kühlmittel direkt in den der Wolframelektrode 8 nahen Bereich zu leiten. Die Rücklaufleitungen 34 enden unmittelbar hinter dem Innendeckelverschluss 40 und dienen zum Abströmen des im Hohlraum 38 des Kühlkörpers 37 erwärmten Kühlmittels.

Das Spitzenende 111 kann vorzugsweise einen geringen Abstand a zum kühlmittelgekühlten Kühlkörper 37 aufweisen.

Der öffnende Winkel α der kegelförmigen Elektrodenspitze 11 kann zwischen 7° und 90° liegen.
Während des Erzeugens des Lichtbogens und danach strömt das Prozessgas über die Prozessgaszuleitung 35 durch den unter dem Deckelverschluss 32 befindlichen Freiraum 29 über die Längskanäle 46 schließlich an der kegelförmigen Wolframelektrodenspitze 11 vorbei in Richtung auf das zu bearbeitende Werkstück 1.

Durch eine intensive Kühlung und bei bestimmten Winkeln α der kegelförmigen Elektrode 8 verschiebt sich die Emissionsisotherme 26 in Richtung zum freien Spitzenende 111. Damit setzt der Lichtbogen 2 an einem kleineren Durchmesser D_{N} an, wie in Fig. 5 gezeigt, und weist dadurch eine höhere Energiedichte auf. Der Elektrodendurchmesser dₑ liegt über den für Wolfram-Inertgasschweißen üblichen Durchmesser, der Elektrodenwinkel α liegt zwischen 7° bis 90° und beide werden für die entsprechende Anwendung angepasst und eingestellt.

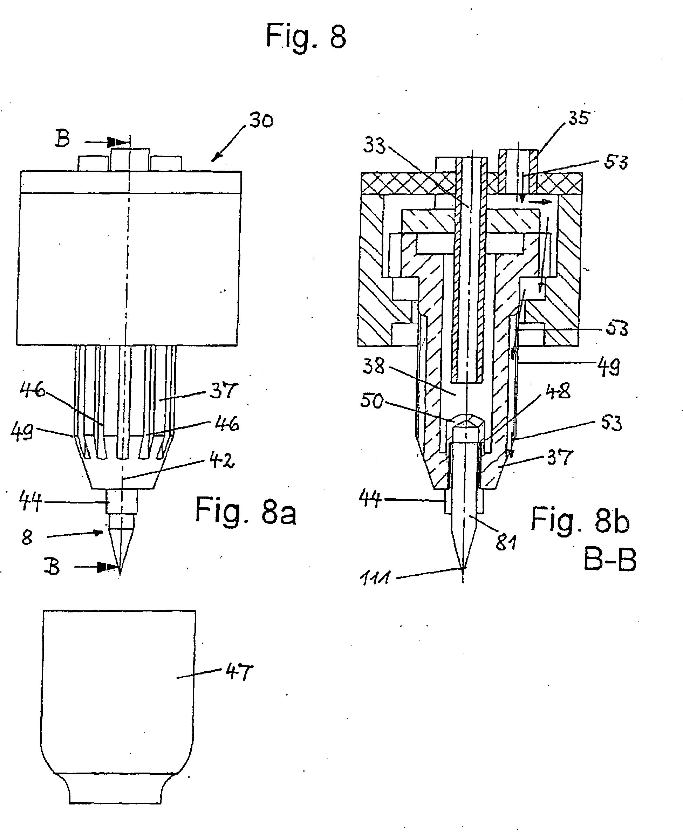

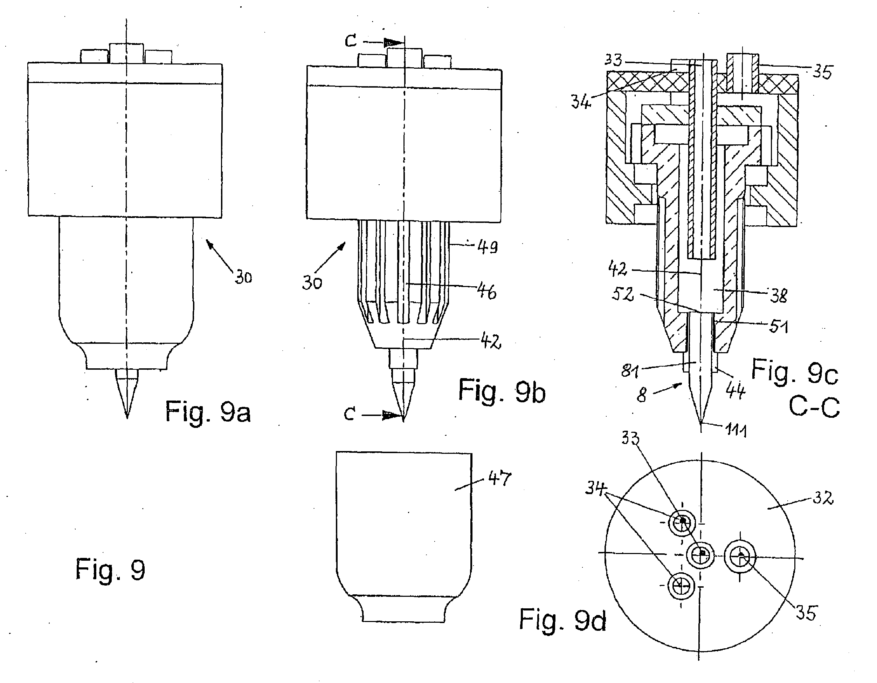

In den folgenden Fig. 8 und 9 wird gezeigt, wie intensiv die Kühlung zwischen der Wolframelektrode 8 und der dem kühlmitteldurchströmten Hohlraum 38 des Kühlkörpers 37 erfindungsgemäß ausgebildet sein kann.

In Fig. 8 sind mehrere Darstellungen eines anderen Brennerkopfes 30 mit geschlossener Gewindebohrung 48 innerhalb des Kühlkörpers 37 gezeigt, wobei in Fig. 8a ein geöffneter Brennerkopf 30 mit abgeschraubter Gasdüse 47 und den parallel zu der Brennerkopfachse 42 geführten Längskanälen 46 im Bereich der Außenwandung 49 des Kühlkörpers 37 und in Fig. 8b ein Querschnitt längs der Linie B-B in Fig. 8a ohne Gasdüse 47 gezeigt sind.
Der in die eingeschraubte Elektrodenhalterung 44 eingebrachte Wolframelektrodenkörper 81 kontaktiert mit seinem oberen zylindrischen Endteil den geschlossenen haubenförmigen Teil 50 der Gewindebohrung 48, wobei der haubenförmige Teil 50 als Teil des Kühlkörpers 37 in den kühlmitteldurchströmten Hohlraum 38 hineinragt.
Von der im Deckelverschluss 32 montierten Prozessgas(Inertgas)zuleitung 35 aus strömt das Inertgas in Strömungsrichtung 53 (Pfeilrichtung) durch Frei- und Hohlräume des Brennerkopfes 30 sowie schließlich durch die Längskanäle 46 auf das Werkstück.

In Fig. 9 sind mehrere Darstellungen eines weiteren Brennerkopfes 30 mit offener Gewindebohrung 51 zum kühlmitteldurchströmten Hohlraum 38 des Kühlkörpers 37 gezeigt, wobei Fig. 9a den geschlossenen Brennerkopf 30 in Vorderansicht, Fig. 9b den geöffneten Brennerkopf 30 mit abgeschraubter Gasdüse 47 und mit den parallel zur Brennerkopfachse 42 geführten Längskanälen 46 am Kühlkörper 37, Fig. 9c einen Querschnitt längs der Linie C-C in Fig. 9b sowie Fig. 9d eine Draufsicht auf den Deckelverschluss 32 mit den Anschlüssen 33,34 - einer Vorlaufleitung 33 und zwei Rücklaufleitungen 34 - für Kühlmittel und der Gaszuleitung 35 zeigen. Zwischen dem Endteil des zylindrischen Wolframelektrodenkörpers 81 und dem kühlmitteldurchströmbaren Hohlraum 38 besteht eine direkte Kontaktstelle 52, so dass eine direkte Wärmeableitung vom Wolframmaterial auf das aus der Vorlaufleitung 33 mit Niedrigtemperatur austretende Kühlmittel erfolgt.
In den beiden letzten Fällen gemäß Fig. 8,9 wird eine intensive Kühlung des Wolframelektrodenkörpers 81 durchgeführt, um die Emissionsisotherme 261 des Lichtbogens in Richtung des Spitzenendes 111 zu verschieben.

Damit kann Folgendes zusammengefasst werden:
- Es liegt ein Wolfram-Inertgas-Schweißbrenner mit einem Brennerkopf 30 zum Wolfram-Inertgasschweißen mit nicht abschmelzender Elektrode 8 vor, bei dem hohe Energiedichten oder Stromdichten j durch eine intensive Kühlung der Elektrode 8 erreicht werden kann. Wie in Fig. 5 gezeigt ist, verschiebt sich für den erfindungsgemäßen Brennerkopf 30 die Emissionsisotherme 261 in Richtung zum freien Spitzenende 111, wobei sich der Durchmesser D_{N} des Lichtbogenansatzes wesentlich verringert. Die Elektrode 8 des Wolfram-Inertgas-Schweißbrenners kann als Katode betrieben werden.
- Das Spitzenende 111 der Katode weist einen möglichst kleinen Abstand a zur unteren Stirnseite 41 des wassergekühlten Kühlkörper 37 auf.
- Die Wolframelektrode 8 ist mit einem gut leitenden Metall oder direkt mit dem Kühlmittel verbunden, um eine intensive Kühlung zu ermöglichen.

Damit ergeben sich wesentliche Vorteile der Erfindung:
- Durch die intensive Kühlung der Wolframelektrode 8 wird die Energiedichte oder die Stromdichte j des Lichtbogens erhöht. Dadurch wird die notwendige Streckenenergie zum Fügen des Werkstücks 1 verringert bzw. die Schweißgeschwindigkeit erhöht.
- Der mittels der betätigbaren Elektrodenhalterung 44 austauschbare Wolframelektrodenkörper 81 hat einen definierten Abstand a zwischen seinem Spitzenende 111 und dem Kühlkörper 37. Das vereinfacht den Elektrodenwechsel und erspart nachträgliche Justagearbeiten. Der Elektrodenwechsel kann automatisiert durchgeführt werden.
- Durch die intensive Kühlung der Elektrode 8 wird der Verschleiß vermindert.
- Wird die Wolframelektrode 8 als Anode genutzt, z.B. beim Schweißen von Aluminium, ist zwar die Strombelastbarkeit wegen der intensiven Kühlung höher, aber es kann gleichermaßen die Energiedichte erhöht werden.

Der Brennerkopf 30 kann zu einem mit einem Handgriff versehenen Wolfram-Inertgas-Schweißbrenner gehören oder in eine Anordnung eines automatischen Fertigungs-/Schweißsystem eingebracht sein.

### Bezugszeichenliste

- 1: Werkstück
- 2: Lichtbogen
- 3: Schweißnaht
- 4: Schweißzusatz
- 5: Schutzgasdüse
- 6: Gasmantel
- 7: Stromkontaktrohr
- 8: Wolframelektrode
- 81: Wolframelektrodenkörper
- 9: Energiequelle
- 10: Vorrichtung nach dem Stand der Technik
- 11: Kegelspitze
- 111: Spitzenende
- 12: Kühlkörper
- 13: Wolframelektrode
- 14: Elektrodenspitze
- 15: Düsenöffnung
- 16: Plasmadüse
- 17: Gasaustrittsöffnung
- 18: Strahlführung
- 19: Werkstück
- 20: Lichtbogen
- 21: Plasmaschweißbrenner
- 22: Lichtbogenströmung
- 23: Erster Ladungsträger
- 24: Zweiter Ladungsträger
- 25: Dritter Ladungsträger
- 26: Emissionsisotherme
- 27: Magnetische Feldlinien
- 28: Elektrische Strömungslinien
- 29: Freiraum
- 30: Brennerkopf
- 31: Gehäusezylinder
- 32: Deckelverschluss
- 33: Vorlaufleitung
- 34: Rücklaufleitung
- 35: Prozessgaszuleitung
- 36: Elektrischer Anschluss
- 37: Kühlkörper
- 38: Hohlraum
- 39: Obere Stirnseite
- 40: Innendeckelverschluss
- 41: Untere Stirnseite
- 42: Brennerkopfachse
- 43: Gewindebohrung
- 44: Elektrodenhalterung
- 45: Durchgang
- 46: Längskanäle
- 47: Gasdüse
- 48: Geschlossene Gewindebohrung
- 49: Außenwandung
- 50: Haubenförmiger Teil
- 51: Offene Gewindebohrung
- 52: Kontaktstelle
- 53: Prozessgasströmungsrichtung

- a: Abstand
- α: Winkel
- d: Durchmesser des Lichtbogens
- dₑ: Elektrodendurchmesser
- f_{L}: Lorentzkraft
- D_{H}: Durchmesser
- D_{N}: Durchmesser
- B: Flussdichte
- j: Stromdichte

## Patentansprüche

1. Wolfram-Inertgas-Schweißbrenner mit einem Brennerkopf (30), bestehend aus
- einem Gehäusezylinder (31) mit einem oberen Deckelverschluss (32), durch den zumindest eine Vorlaufleitung (33) und eine Rücklaufleitung (34) für Kühlmittel sowie eine Prozessgaszuleitung (35) und ein Elektroanschluss (36) für den Betrieb einer Wolframelektrode (8) geführt sind,
- einem innerhalb des Gehäusezylinders (31) befindlichen länglichen Kühlkörper (37) und mit einem darin befindlichen länglichen, an der oberen Stirnseite (39) des Kühlkörpers (37) offenen Hohlraum (38),
- einen Elektrode (8), die einen zylindrischen und mit einer Kegelspitze (11) versehenen Wolframelektrodenkörper (81) aufweist,
und **gekennzeichnet durch** folgende Merkmale
- ein auf dem Külkörper (37) befindlicher Innendeckelverschluss (40), **durch** den die Leitungen (33,34) für das Kühlmittel führen,
- eine auf der unteren Stirnseite (41) des Kühlkörpers (37) längs der Brennerkopfachse (42) eingelassene Gewindebohrung (43), wobei die Elektrode in die Gewindebohrung (43) passfähig arretierfähig gehalten ist, und das Spitzenende (111) des Elekrodenkörpers (81) in eine vorgegebenen Abstand (a) zur unteren Stirnseite (41) des Kühlkörpers (37) angeordnet ist, und
- eine mit dem länglichen Kühlkörper (37) unter Einbindung von Längskanälen (46) in Verbindung stehende verschraubbare Gasdüse (47), die den Kühlkörper (37) und die Elektrode (8) umgibt,
wobei der thermische Widerstand der dem Wolframelektrodenkörper (81) nachgeordneten Materialien niedrig ist und die Kühlung über den Kühlkörper (37) bis an die Gewindebohrung (43) oder direkt an die Elektrode (8) herangeführt ist und sich eine Emissionsisotherme (261) ausbildet, die **durch** die intensive Kühlung der Elektrode, den Elektrodendurchmesser (dₑ) und **durch** einen definierten Winkel (α) in Richtung zum freien Spitzenende (111) verschoben ist.

2. Wolfram-Inertgas-Schweißbrenner nach Anspruch 1,
**dadurch gekennzeichnet,**
**dass** nahe oder außerhalb des Brennerkopfes (30) vorzugsweise an der Rücklaufleitung (34) ein Elektroanschluss (36) für den Betrieb der Wolframelektrode (8) angebracht ist.

3. Wolfram-Inertgas-Schweißbrenner nach Anspruch 1,
**dadurch gekennzeichnet,**
**dass** die passfähige arretierbare Elektrode (8) selbst am zylindrischen Teil des Wolframelektrodenkörpers (81) ein der Gewindebohrung (43) angepasstes Gewinde aufweist und direkt kühlkörperkontaktiert in die Gewindebohrung (43) eingeschraubt ist.

4. Wolfram-Inertgas-Schweißbrenner nach Anspruch 1,
**dadurch gekennzeichnet,**
**dass** die passfähige arretierbare Elektrode (8) einen Durchgang (45) aufweisende Elektrodenhalterung (44) hat, in den der Wolframelektrodenkörper (81) mittels Löten oder Einpressen eingepasst befestigt ist, wobei die Elektrodenhalterung (44) ein der Gewindebohrung (43) angepasstes Außengewinde zum halternden Einschrauben in die Gewindebohrung (43) besitzt.

5. Wolfram-Inertgas-Schweißbrenner nach Anspruch 4,
**dadurch gekennzeichnet,**
**dass** die den Durchgang (45) aufweisende Elektrodenhalterung (44) als eine Hohlschraube ausgebildet ist.

6. Wolfram-Inertgas-Schweißbrenner nach Anspruch 3 oder 4,5,
**dadurch gekennzeichnet,**
**dass** der Wolframelektrodenkörper (81) entweder im Falle eines eigenen Gewindes selbst austauschbar oder im Falle der Einbindung in die von außerhalb des Brennerkopfes (30) betätigbare Elektrodenhalterung (44) mit der Elektrodenhalterung (44) gemeinsam austauschbar ist.

7. Wolfram-Inertgas-Schweißbrenner nach Anspruch 4 bis 6,
**dadurch gekennzeichnet,**
**dass** die Elektrodenhalterung (44) aus einem Material mit niedrigem thermischem Widerstand, insbesondere aus Kupfer, Silber und deren Legierungen besteht.

8. Wolfram-Inertgas-Schweißbrenner nach Anspruch 4 bis 7,
**dadurch gekennzeichnet,**
**dass** der zylindrische Teil des Wolframelektrodenkörper (81) und die Elektrodenhalterung (44) kraft- und oder stoffschlüssig verbunden sind ist, wobei zwischen beiden ein geringer elektrischer und thermischer Widerstand vorgesehen ist.

9. Wolfram-Inertgas-Schweißbrenner nach Anspruch 1,
**dadurch gekennzeichnet,**
**dass** die Kühlung innerhalb des Kühlkörpers (37) als Flüssigkeitskühlung ausgebildet ist.

10. Wolfram-Inertgas-Schweißbrenner nach Anspruch 1,
**dadurch gekennzeichnet,**
**dass** zwischen dem länglichen Kühlkörper (37) und der Gasdüse (47) in axialer Richtung zur Brennerkopfachse (42) gerichtete Längskanäle (46) vorhanden sind, die an der Außenwandung (49) des Kühlkörpers (37) und/oder auch an der Innenwandung der Gasdüse (47) eingebracht sind.

11. Wolfram-Inertgas-Schweißbrenner nach Anspruch 1,9,10,
**dadurch gekennzeichnet,**
**dass** das Spitzenende (111) des Wolframelektrodenkörpers (81) einen geringen Abstand (a) zum kühlmittelgekühlten Kühlkörper (37) aufweist.

12. Wolfram-Inertgas-Schweißbrenner nach Anspruch 1,
**dadurch gekennzeichnet,**
**dass** der öffnende Winkel (α) der kegelförmigen Elektrodenspitze (11) im Bereich zwischen 7° und 90° liegt.

## Claims

1. Tungsten inert gas welding torch with a torch head (30), consisting of
- a housing cylinder (31) with an upper lid closure (32), through which at least one feed line (33) and a return line (34) for coolant and also a process gas supply line (35) and an electrical connection (36) for the operation of a tungsten electrode (8) are guided,
- a longitudinal heat sink (37) located within the housing cylinder (31) and with a longitudinal cavity (38) located therein and open at the upper end face (39) of the heat sink (37),
- an electrode (8) which has a cylindrical tungsten electrode body (81) provided with a cone tip (11),
and **characterised by** the following features
- an inner lid closure (40) located on the heat sink (37), through which the lines (33, 34) for the coolant lead,
- a threaded hole (43) embedded along the torch head axis (42) on the lower end face (41) of the heat sink (37), wherein the electrode is held into the threaded hole (43) such that it can fit and lock, and the tip end (111) of the electrode body (81) is arranged at a predetermined distance (a) to the lower end face (41) of the heat sink (37), and
- a screwable gas nozzle (47) which is connected to the longitudinal heat sink (37) with the integration of longitudinal channels (46), which gas nozzle surrounds the heat sink (37) and the electrode (8),
wherein the thermal resistance of the materials arranged downstream of the tungsten electrode body (81) is low and the cooling is led via the heat sink (37) to the threaded hole (43) or directly to the electrode (8) and forms an emission isotherm (261) which is displaced by means of the intensive cooling of the electrode, the electrode diameter (dₑ) and through a defined angle (α) in the direction towards the free tip end (111).

2. Tungsten inert gas welding torch according to Claim 1,
**characterised in that**
an electrical connection (36) for the operation of the tungsten electrode (8) is attached close to or outside of the torch head (30), preferably on the return line (34).

3. Tungsten inert gas welding torch according to Claim 1,
**characterised in that**
the electrode (8) which can fit and be locked itself has a thread adapted to the threaded hole (43) on the cylindrical part of the tungsten electrode body (81) and is screwed directly into the threaded hole (43) in a manner in which it is in contact with the heat sink.

4. Tungsten inert gas welding torch according to Claim 1,
**characterised in that**
the electrode (8) which can fit and be locked has an electrode holder (44) which has a passage (45) into which the tungsten electrode body (81) is fixed in a fitted manner by means of soldering or pressing in, wherein the electrode holder (44) has an outer thread adapted to the threaded hole (43) for mounting screwing into the threaded hole (43).

5. Tungsten inert gas welding torch according to Claim 4,
**characterised in that**
the electrode holder (44) having the passage (45) is constructed as a hollow screw.

6. Tungsten inert gas welding torch according to Claim 3 or 4, 5,
**characterised in that**
the tungsten electrode body (81) can either be exchanged itself in the case of its own thread or, in the case of the integration into the electrode holder (44) which can be actuated from outside of the torch head (30), can be exchanged together with the electrode holder (44).

7. Tungsten inert gas welding torch according to Claims 4 to 6,
**characterised in that**
the electrode holder (44) consists of a material with low thermal resistance, particularly of copper, silver and their alloys.

8. Tungsten inert gas welding torch according to Claims 4 to 7,
**characterised in that**
the cylindrical part of the tungsten electrode body (81) and the electrode holder (44) are frictionally and/or materially connected, wherein a small electrical and thermal resistance is provided between both.

9. Tungsten inert gas welding torch according to Claim 1,
**characterised in that**
the cooling within the heat sink (37) is constructed as liquid cooling.

10. Tungsten inert gas welding torch according to Claim 1,
**characterised in that**
longitudinal channels (46) directed in the axial direction to the torch head axis (42) are present between the longitudinal heat sink (37) and the gas nozzle (47), which longitudinal channels are introduced on the outer wall (49) of the heat sink (37) and/or also on the inner wall of the gas nozzle (47).

11. Tungsten inert gas welding torch according to Claim 1, 9, 10,
**characterised in that**
the tip end (111) of the tungsten electrode body (81) has a small distance (a) to the coolant-cooled heat sink (37).

12. Tungsten inert gas welding torch according to Claim 1,
**characterised in that**
the opening angle (α) of the conical electrode tip (11) is in the range between 7° and 90°.

## Revendications

1. Chalumeau de soudage au tungstène et au gaz inerte équipé d'une tête de chalumeau (30), comprenant
- un cylindre de carter (31) avec une fermeture de couvercle (32) supérieure, par laquelle sont guidés au moins une conduite aller (33) et une conduite retour (34) pour du réfrigérant ainsi qu'une arrivée de gaz de procédé (35) et un branchement électrique (36) pour le fonctionnement d'une électrode en tungstène (8).
- un corps réfrigérant (37) allongé, se trouvant à l'intérieur du cylindre de carter (31) et une cavité (38) allongée se trouvant à l'intérieur, ouverte sur le côté avant (39) supérieur du corps réfrigérant (37),
- une électrode (8), qui présente un corps d'électrode en tungstène (81) cylindrique et doté d'une pointe conique (11),
et **caractérisé par** les caractéristiques suivantes
- une fermeture par couvercle intérieur (40) se trouvant sur le corps réfrigérant (37), par laquelle passent les conduites (33, 34) pour le réfrigérant,
- un alésage fileté (43) emboîté sur le côté avant (41) inférieur du corps réfrigérant (37) le long de l'axe de la tête de chalumeau (42), l'électrode étant maintenue dans l'alésage fileté (43) avec une possibilité de blocage adaptable, et l'extrémité de pointe (111) du corps d'électrode (81) étant disposée à une distance (a) prédéfinie du côté avant (41) inférieur du corps réfrigérant (37) et
- une tuyère à gaz (47) vissable, en liaison avec le corps réfrigérant (37) allongé avec l'intégration de canaux longitudinaux (46), qui entoure le corps réfrigérant (37) et l'électrode ((8),
la résistance thermique des matériaux placés en aval du corps d'électrode en tungstène (81) étant faible et le refroidissement étant guidé en se rapprochant par le corps réfrigérant (37) jusqu'à l'alésage fileté (43) ou directement jusqu'à l'électrode (8) et une isotherme d'émission (261) se formant, laquelle est décalée par le refroidissement intensif de l'électrode, le diamètre d'électrode (dₑ) et par un angle (α) défini en direction de l'extrémité de pointe (111) libre.

2. Chalumeau de soudage au tungstène et au gaz inerte selon la revendication 1,
**caractérisé en ce**
**qu'**un branchement électrique (36) pour le fonctionnement de l'électrode en tungstène (8) est placé à proximité ou en dehors de la tête de chalumeau (30) de préférence sur la conduite retour (34).

3. Chalumeau de soudage au tungstène et au gaz inerte selon la revendication 1,
**caractérisé en ce que**
l'électrode (8) avec possibilité de blocage adaptable présente elle-même un filetage adapté à l'alésage fileté (43) sur la partie cylindrique du corps d'électrode en tungstène (81) et est vissé directement dans l'alésage fileté (43) de façon à être en contact avec le corps réfrigérant.

4. Chalumeau de soudage au tungstène et au gaz inerte selon la revendication 1,
**caractérisé en ce que**
l'électrode (8) avec possibilité de blocage adaptable a un porte-électrode (44) présentant un passage (45), dans lequel le corps d'électrode en tungstène (81) est inséré par brassage ou enfoncement, le porte-électrode (44) présentant un filetage extérieur adapté à l'alésage fileté (43) pour l'enfoncement fixe dans l'alésage fileté (43).

5. Chalumeau de soudage au tungstène et au gaz inerte selon la revendication 4,
**caractérisé en ce que**
le porte-électrode (44) présentant le passage (45) est conçu sous forme d'une vis creuse.

6. Chalumeau de soudage au tungstène et au gaz inerte selon la revendication 3 ou 4,5,
**caractérisé en ce que**
le corps d'électrode en tungstène (81) est remplaçable dans le cas d'un filetage propre même ou est remplaçable conjointement avec le porte-électrode (44) dans le cas de l'intégration dans le porte-électrode (44) pouvant être actionné par l'extérieur de la tête de chalumeau (30).

7. Chalumeau de soudage au tungstène et au gaz inerte selon les revendications 4 à 6,
**caractérisé en ce que**
le porte-électrode (44) est fait à base d'un matériau avec une faible résistance thermique, en particulier à base de cuivre, d'argent et de leurs alliages.

8. Chalumeau de soudage au tungstène et au gaz inerte selon les revendications 4 à 7,
**caractérisé en ce que**
la partie cylindrique du corps d'électrode en tungstène (81) et le porte-électrode (44) sont reliés par liaison de force et/ou de matière, une faible résistance électrique et thermique étant prévue entre les deux.

9. Chalumeau de soudage au tungstène et au gaz inerte selon la revendication 1,
**caractérisé en ce que**
le refroidissement à l'intérieur du corps réfrigérant (37) est conçu sous forme de refroidissement par liquide.

10. Chalumeau de soudage au tungstène et au gaz inerte selon la revendication 1,
**caractérisé en ce que**
des canaux longitudinaux (46) dirigés dans la direction axiale par rapport à l'axe de la tête de chalumeau (42), qui sont introduits sur la paroi externe (49) du corps réfrigérant (37) et/ou également sur la paroi interne de la buse à gaz (47), sont présents entre le corps réfrigérant (37) allongé et la buse à gaz (47).

11. Chalumeau de soudage au tungstène et au gaz inerte selon les revendications 1, 9, 10,
**caractérisé en ce que**
l'extrémité de pointe (111) du corps d'électrode en tungstène (81) présente une faible distance (a) au corps réfrigérant (37) refroidi par réfrigérant.

12. Chalumeau de soudage au tungstène et au gaz inerte selon la revendication 1,
**caractérisé en ce que**
l'angle d'ouverture (α) de la pointe d'électrode (11) conique se situe dans la plage comprise entre 7° et 90°.
